# EUROPEAN PATENT APPLICATION

(11) **EP 1 270 191 A1**
(43) Date of publication of application: **02.01.2003**
(21) Application number: 01830429.5
(22) Date of filing: 26.06.2001
(51) Int. Cl.: B29D 31/518

(54) **Footwear insole manufacturing method**

(71) Applicant: COSTRUZIONI MECCANICHE BANF S.R.L., I-27036 Mortara (IT)
(72) Inventor: Negri, Santino, 27036 Mortara, Pavia (IT)
(74) Representative: Faggioni, Marco, Dr. Ing.

(57) **Abstract**

In a footwear insole manufacturing method, a sheet (L) of cellulose material, or other materials compatible with the insole manufacturing technique, is combined with a plastic material support (M) by means of an injection molding process of said plastic material (M) at the molten state in the flat mold of an injection press (Pi), wherein said sheet (L) of cellulose material has been previously inserted. The semifinished product outcoming from said injection mold is immediately transferred, while the plastic material is still at high temperature, into the mold of a forming press (Pf) apt to deform the flat shape of the semifinished product outcoming from the injection mold into an arched shape corresponding to the shoe-tree onto which the insole (S) is meant to be fitted for the production of the footwear.

## Description

The present invention concerns a footwear insole manufacturing method.

As known to the experts in the footwear field, the insole is the part of the shoe onto which the foot rests and to which is fixed first the vamp and then the outsole. The insole is thus a structural component considered very important for the shoe, since it serves as support for the assembly thereof and it is apt to guarantee the maintenance of its shape in time.

The insoles, once manufactured of leather or its substitutes, are nowadays mostly produced starting from cellulose materials, reinforced with inserts of metallic or plastic materials. For a good functionality of this fundamental element of the shoe, it is essential for it to accurately reproduce the particular anatomical arched shape of the foot, so as to form a suitable support for the same, and to keep this shape in time, without yieldings or deformations, while offering to the foot a sufficiently flexible and comfortable support.

At present, in the footwear field there are two consolidated insole manufacturing techniques, which will be shortly described hereunder to make the subject of the present invention more comprehensible.

According to a first manufacturing method, the insole is formed by sticking together two sheets of cardboard or other cellulose materials, previously die cut by plates of such materials, inserting between them a steel foil, previously treated and shaped in the wanted pattern, and finally pressing in a mold the sandwich structure thus obtained, so as to give to the insole the final desired shape. The insoles thus prepared are then transferred to a milling station, to be milled in correspondence of the heelpiece - where the insole has a further thickness for its function to support the weight of the user - so as to obtain an angled edge of connection to the shoe-tree, to which the insoles must be caused to adhere in order to assemble the shoe.

According to a second manufacturing method, the insole is formed by injection molding of a suitable plastic material in a mold wherein a sheet of cellulose material has been previously introduced, so as to obtain a finished insole, already supplied with the required thickness increase and with the angled edge near the heel. Normally, to reach a sufficiently large production, the molding is carried out in a revolving table press and the molds must be built so as to provide the particular arched shape which the insole shall take when completed.

The manufacturing methods briefly described hereabove involve substantially opposite advantages and drawbacks. The first method allows in fact to obtain a high production flexibility, because the different manufacturing steps do not require long times to prepare the machinery and high costs for the equipment, since the moulding press has a simple structure and, moreover, it can normally be used with a single pair of molds (male/female) for all the insoles of a same shoe model, independently from the size of each single insole, or at the most with two pairs of molds for footwear of particular quality, especially in the case of female footwear. On the other hand, this method involves high costs both for what concerns the manpower, due to the different aforedescribed working steps, and for what concerns the storage, since it is necessary to store a suitable supply of steel foils in the different shapes and sizes employed, as well as of sheets of cellulose materials in the different thicknesses, so as to be able to obtain the heel portion of increased thickness.

Whereas, the advantages of the second method described heretofore lie in a low production cost, due to a reduced use of manpower - since the working process only foresees the die cutting step of the cellulose material and the insertion of the same material in the injection moulding press, from which the insole comes out already as a finished product - and to a reduced storage, since it is merely sufficient to store the granular plastic material and the cellulose material in sheets all of the same thickness. On the other hand, this second manufacturing method involves a low flexibility of production, whereby it can be economically applied only in the case of average or mass productions, since the setup of the injection moulding press requires long times for the replacement of the molds. The method also suffers from a law productivity since the plastic material, heat-injected in the mold, must be left to cool for a sufficiently long time before the mold is opened again, so that the insole may steadily keep the arched shape which it has been given. Finally, the molds manufacturing cost is particularly high, due to the fact that the molds are not flat but they have a variously arched shape, and that the respective working process must thus be carried out with special machinery and techniques, and also due to the fact that for each model of footwear - and thus of insole - it is necessary to create not only a single mold, but a whole series of molds corresponding to each different size of footwear produced.

Taking into account the above and considering that the production of quality footwear is now more and more frequent for small or very small series of shoes, due to the constant changes in the fashion, it is quite comprehensible why there is such a high requirement in the market for an insole manufacturing method which, while preserving characteristics of wide flexibility, allows to reduce the steps of the manufacturing process and simplify them, so as to provide an overall reduction of the production costs.

The object of the present invention is thus to supply a new insole manufacturing method which satisfies this requirement, combining the advantages of both the above methods of prior art, such as in particular a large production flexibility, a reasonable cost for the machinery, and reduced costs of manpower and storage.

According to the present invention, said object is reached by means of a footwear insole manufacturing method - of the type wherein a sheet of cellulose material, or other materials compatible with the insole manufacturing technique, is combined with a plastic material support by means of an injection molding process of said plastic material at the molten state in the mold of an injection press, wherein said sheet of cellulose material has been previously inserted - characterized in that said injection mold is flat, and in that the semifinished product outcoming from said injection mold is immediately transferred, while the plastic material is still at high temperature, into the mold of a forming press apt to deform the flat shape of the semifinished product outcoming from the injection mold into an arched shape, corresponding to the shoe-tree onto which the insole is meant to be fitted for the production of the footwear.

Further characteristics and advantages of the present invention will anyhow result more evident from the following detailed description, given with reference to the single accompanying drawing, which shows a flow diagram of the footwear insole manufacturing method according to the present invention.

The insoles manufactured with the method according to the present invention have a structure fully similar to that of the insoles obtained with the second manufacturing method of the above mentioned prior art. They in fact comprise a first layer of cardboard or other cellulose material, or also other materials compatible with the insoles extrusion technique, to which there is coupled - by means of an injection molding process - a plastic material support of variable thickness, that is in particular, thicker in correspondence of the portion supporting the heel.

Cardboard or another cellulose material L, in sheets of uniform thickness, is fed to a die cutter F which provides to cut into the desired shape and size the elements designed for the insoles production. Such elements are then inserted into the mold of an injection press Pi, which mold - contrarily to what happens in the second known method described heretofore - is a totally flat mold, and thus far more economic to produce as compared to the molds with an arched shape employed in said second known method. However, the mold of the injection press Pi has a deeper impression in the area of the heel and an inclined profile of the heel edge, so that when plastic material M is fed into said mold at the molten state, a perfect coupling is obtained between the cellulose material L previously inserted in said mold and the plastic material M, thereby producing a semifinished product which has all the final characteristics required for the insole, except for the particular arched shape which must necessarily be given to the actual insole. In fact, since the mold of the injection press Pi is a flat mold, also the semifinished product outcoming from said mold is perfectly flat.

According to the essential characteristic of the invention, the semifinished product is drawn out of the mold of the press Pi as soon as it has been formed - that is, immediately after injection of the plastic material M, thus when said material, even if no longer at the molten state, is still at a high temperature and is hence totally deformable - and is transferred, in a fully automatic way, to the mold of a forming press Pf which deforms the still plastic flat structure, giving to said semifinished product the wanted final arched shape and thereby producing the finished insole S.

The advantages reached with the manufacturing method according to the present invention are numerous and particularly interesting. First of all, in fact, the use of a flat mold for the injection press Pi allows to considerably reduce the cost of this apparatus compared to the known-type presses wherein the mold has the same final arched shape of the insole. Secondly, the arched mold used in the forming press Pf is a mold involving low costs and it can be adapted to all the sizes of insole for a single shoe model, exactly like the similar molds used in the first aforecited known manufacturing method. Finally, the automatic transfer of the semifinished product from the mold of the press Pi to that of the press Pf, accelerates the cooling of the insole, thereby considerably reducing the manufacturing times. It is finally evident that, during transfer of the insole from the press Pi to the press Pf, a new cellulose support L, sheared by the die cutter F, is inserted into the press Pi so that, during pressing and cooling of an insole in the press Pf, a new insole is formed in the press Pi, thereby reducing to less than half the overall manufacturing times.

The footwear insole manufacturing method according to the present invention hence allows to combine all the advantages of the two aforedescribed methods of prior art, without suffering from the respective drawbacks, and it has thus fully reached the intended object.

In the previous description, the injection press Pi and the forming press Pf have been described as two independent apparatuses, but it is evident that they may be favourably incorporated into a single machine supplied with two molds and with a single pressing system, since the compression process takes place simultaneously in the mold of the press Pi and in the mold of the press Pf.

It is also understood that the aforedescribed system can be just as successfully applied both to single-mold presses and to multi-mold presses, it being evident that, also in this case, to each mold of the injection press there must be suitably associated a mold of the forming press.

It is evident that the protection scope of the present invention is not limited to the particular embodiment of the footwear insole manufacturing method described heretofore, but it extends to any possible variants thereof within reach of a technician skilled in the art, provided that they fall within the definitions of the invention given in the accompanying claims.

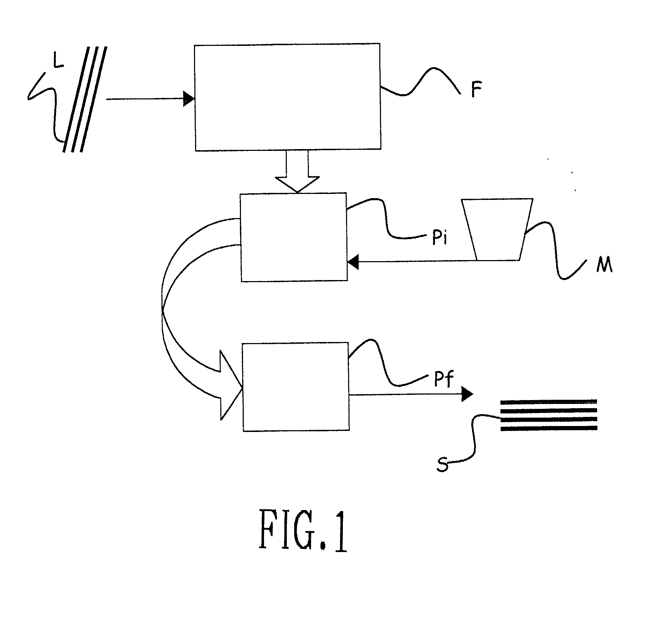

## Claims

1. Footwear insole manufacturing method - of the type wherein a sheet (L) of cellulose material, or other materials compatible with the insole manufacturing technique, is coupled with a plastic material support (M) by means of an injection molding process of said plastic material (M) at the molten state in the mold of an injection press (Pi), wherein said sheet (L) of cellulose material has been previously inserted - **characterized in that** said injection mold is flat, and **in that** the semifinished product outcoming from said injection mold is immediately transferred, while the plastic material is still at high temperature, into the mold of a forming press (Pf) apt to deform the flat shape of the semifinished product outcoming from the injection mold into an arched shape, corresponding to the shoe-tree onto which the insole (S) is meant to be fitted for the production of the footwear.

2. Method as in claim 1), wherein said injection press (Pi) and said forming press (Pf) are incorporated into a single machine.

3. Method as in claim 1) or 2), wherein said injection press (Pi) and said forming press (Pf) are multi-mold presses.

4. Method as in any one of the previous claims, wherein the transfer of the semifinished product from the mold of the injection press (Pi) to the mold of the forming press (Pf) takes place automatically.

5. Method as in any one of the previous claims, wherein said sheet (L) is obtained in a die cutter station (F).

6. Method as in claims 4) and 5), wherein said sheet (L) is automatically inserted into the injection press (Pi) while the semifinished product is transferred from the injection press (Pi) to the forming press (Pf).
